# EUROPEAN PATENT SPECIFICATION

(11) **EP 3 167 372 B1**
(45) Date of publication and mention of the grant of the patent: **31.10.2018**
(21) Application number: 15728288.0
(22) Date of filing: 21.05.2015
(51) Int. Cl.: G06F 11/14, G06F 11/16, G06F 11/20

(54) **METHODS FOR FACILITATING HIGH AVAILABILITY STORAGE SERVICES AND CORRESPONDING DEVICES**
VERFAHREN ZUR BEREITSTELLUNG VON SPEICHERDIENSTEN MIT HOHER VERFÜGBARKEIT UND VORRICHTUNGEN DAFÜR
PROCÉDÉS POUR FACILITER DES SERVICES DE STOCKAGE À HAUTE DISPONIBILITÉ ET DISPOSITIFS CORRESPONDANTS

(30) Priority: 08.07.2014 US 201414325897; 29.01.2015 US 201514608756
(43) Date of publication of application: 17.05.2017
(73) Proprietor: NetApp, Inc., Sunnyvale, CA 94089 (US)
(72) Inventor: CARADONNA, Joseph, Ashland, MA (US); RAJARAMAN, Rajesh, Acton, MA 01720 (US); GOLDSCHMIDT, Jason, Newton, MA 02465 (US); SHIHAB, Ahmed, Danville, CA 94526 (US)
(74) Representative: D Young & Co LLP
(86) International application number: PCT/US2015/031906
(87) International publication number: WO 2016/007230

(56) References cited:
- US-A1- 2012 278 429
- US-B1- 7 111 189
- US-B1- 8 255 739

## Description

### FIELD

This technology relates to failover in data storage networks, and more particularly to methods and devices for providing high availability storage services.

### BACKGROUND

A storage fabric may include multiple storage controllers, including physical and/or virtual storage controllers, which store and manage data on behalf of clients. Applications utilizing such storage systems rely on continuous data availability. Accordingly, with respect to physical storage controllers, one common technique to provide high availability is to cross wire storage drives or fabric between two physical storage controllers to provide a seamless transfer if one of the physical storage controllers fails.

While both physical storage controllers can operate simultaneously, neither physical storage controller should operate at greater than half capacity since each of the physical storage controller may need to service the traffic previously serviced by a failed one of the physical storage controllers. Accordingly, providing high availability in the context of physical storage controllers requires maintaining significantly underutilized storage controllers with excess headroom, which is undesirable particularly considering the relatively high cost of the hardware required to implement the physical storage controllers. Additionally, the pairing of storage controllers is not an optimal solution in platforms requiring significant scalability.

While virtual storage controllers generally require relatively lower cost to implement than physical storage controllers, and therefore underutilization is not a significant concern, platforms on which virtual storage controllers are implemented may not allow sharing of the same storage drives or fabric between virtual storage controllers or, more specifically, the virtual machines on which the virtual storage controllers are executed. Accordingly, cloud platform providers do not offer virtual storage controllers a shared storage fabric.

Instead, high availability for cloud platforms is often implemented using mirroring of the stored data, requiring replication and associated storage costs, which can be significant. Another technique is simply to reboot a failed virtual storage controller. However, rebooting generally takes on the order of several minutes within which applications relying on the services provided by a failed virtual storage controller will generally fail themselves. Therefore, providing high availability of virtual storage controllers on a cloud platform generally results in significant additional storage cost or application disruption and/or failure.

US 8255739 describes a method for achieving data consistency during a failover from a primary node to a secondary node in a storage cluster with a shared RAID array in a degraded mode. When the primary storage node receives a write I/O operation, a volume module on the primary node reads the missing data strip data from the failed disk belonging to the stripe targeted by the write I.O operation. The primary storage node communicates the missing data strip to the secondary storage node, which writes the missing strip data to an outstanding strip log. Upon the failure of the primary node, the secondary storage node reads the missing data strip from the outstanding strip log and writes the missing data strip to the shared RAID array, thus restoring data consistency to the stripe of the RAID array containing the missing data strip.

US 7111189 discloses a disaster-tolerant data backup and remote copy system which is implemented as a controller-based replication of one or more LUNs (logical units) between two remotely separated pairs of array controllers connected by redundant links. In the situation wherein an array controller fails during an asynchronous copy operation, the partner array controller uses a 'micro log' stored in mirrored cache memory to recover transactions, in order, which were 'missed' by the backup storage array when the array controller failure occurred.

US 2012/278429 discloses a cluster system including an active server and an additional server. Each of the servers includes a database (DB) storing therein client data, information indicating the location of the client data, and information indicating a record status as a record. The active server transmits a record included in the DB as first information as well as type information indicating the first information to the additional server, and when the record is updated, transmits the record thus updated as second information as well as type information indicating the second information to the additional server. The additional server receives the first information or the second information from the active server. The additional server then generates a record for the information thus received in the DB depending on the received type information and the status of the record stored in the DB and identified by the received information.

### SUMMARY

The invention is defined in the appended independent claims 1, 7 and 13.

This technology provides a number of advantages including more efficient and effective methods, non-transitory computer readable media, and devices for facilitating high availability storage services. With this technology, a passive virtual storage controller can assume the role of an active virtual storage controller in the event the active virtual storage controller fails without requiring the complex operation of giving back the traffic previously serviced by the active controller, reserving headroom in the active controller, or replicating any data. Additionally, with this technology, high availability can be provided for virtual storage controllers implemented in a cloud platform while minimizing the disruption to applications relying on the storage services provided by the virtual storage controllers.

Additionally, with this technology, a storage controller can assume the role and responsibility of a storage controller that has failed, without having to return traffic to a recovered storage controller, reserve headroom in the active controller, or replicate data. This technology is highly scalable and high availability can be provided for many or "n" active storage controllers by only one passive storage controller, although more passive storage controllers can be utilized depending on the desired level of protection.

### BRIEF DESCRIPTION OF THE DRAWINGS

FIG. 1 a block diagram of a network environment with an exemplary storage fabric including a plurality of exemplary host devices;
FIG. 2 is a block diagram of an exemplary host device on which at least a passive and an active virtual storage controller are executed;
FIG. 3 a block diagram of another network environment with an another exemplary storage fabric including a plurality of exemplary storage controllers;
FIG. 4 is a block diagram of an exemplary storage controller;
FIG. 5 is a flowchart of an exemplary method for facilitating high availability storage services with an active virtual storage controller; and
FIG. 6 is a flowchart of an exemplary method for facilitating high availability storage services with a passive virtual storage controller.
FIG. 7 is a flowchart of an exemplary method for facilitating n-way high availability storage services with an active storage controller;
FIG. 8 is a flowchart of an exemplary method for facilitating high availability storage services with a passive storage controller;
FIG. 9 is another exemplary network environment with three active storage controllers and a passive storage controller;
FIG. 10(1) is the exemplary network environment of FIG. 9 in which an active storage controller has failed and a formerly passive storage controller has become an active storage controller; and
FIG. 11 is the exemplary network environment of FIGS. 9 and 10(1) in which an active storage controller that failed has become a passive storage controller.

### DETAILED DESCRIPTION

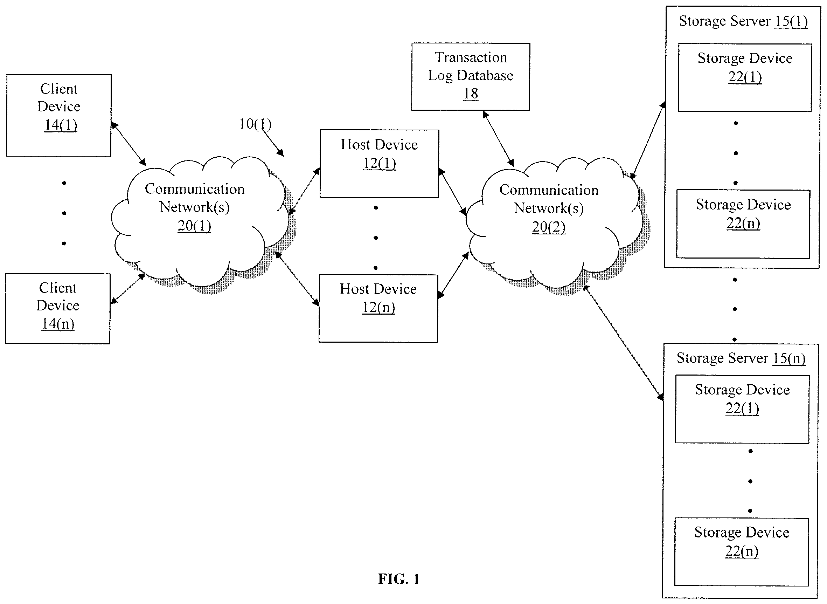

A network environment 10(1) including a storage fabric with exemplary host devices 12(1)-12(n) is illustrated in FIG. 1. The environment 10(1) in this example further includes client devices 14(1)-14(n), storage servers 15(1)-15(n), and an optional transaction log database 18, although this environment 10(1) can include other numbers and types of systems, devices, components, and/or elements in other configurations, such as multiple numbers of each of these apparatuses and devices. The client computing devices 14(1)-14(n) are in communication with the host devices 12(1)-12(n) through the communication network(s) 20(1) and the host devices 12(1)-12(n) are in communication with the storage servers 15(1)-15(n) and transaction log database through communication network(s) 20(2). This technology provides a number of advantages including methods, non-transitory computer readable medium, and devices that relatively efficiently facilitate high availability of storage services.

Each of the client devices 14(1)-14(n) in this example can include a processor, a memory, a network interface, an input device, and a display device, which are coupled together by a bus or other link, although each of the client devices can have other types and numbers of components or other elements and other numbers and types of network devices could be used. The client devices 14(1)-14(n) may run interface applications that provide an interface to make requests for and send content and/or data to the host devices via the communication network(s) 20(1), for example. Each of the client devices 14(1)-14(n) may be, for example, a conventional personal computer, a workstation, a smart phone, a virtual machine running in a cloud, or other processing and/or computing device.

Each of the storage servers 15(1)-15(n) in this example include a storage device 22(1)-22(n), a processor, and a network interface coupled together by a bus or other link. The storage devices 22(1)-22(n) in this example can include conventional magnetic disks, solid-state drives (SSDs), or any other type of stable, non-volatile storage device suitable for storing large quantities of data. The storage servers 15(1)-15(n) may be organized into one or more volumes of Redundant Array of Inexpensive Disks (RAID), although other types and numbers of storage servers in other arrangements can be used.

The transaction log database 18 can optionally be hosted by a shared memory server, which includes a processor, a memory, and a network interface coupled together by a bus or other communication link, and can be an in-memory database or cache (e.g., the ElastiCache web service product available from Amazon.com, Inc. of Seattle, Washington) or flash-based storage, for example, although other types of storage can also be used for the transaction log database 18. The transaction log database 18 is configured to store a plurality of transaction logs, each associated with an active storage controller, which are used by the active storage controllers to store information associated with transactions received from the client devices 14(1)-14(n), for example, although the transaction logs can also be used to store other information received from other sources, as described and illustrated in more detail later.

The host devices in this example operate on behalf of the client devices 14(1)-14(n) to store and manage files or other units of data stored by the storage servers 15(1)-15(n). Accordingly, the host devices manage the storage servers 15(1)-15(n) in this example and receive and respond to various read and write requests from the client devices 14(1)-14(n) directed to data stored in, or to be stored in, one or more of the storage servers 15(1)-15(n).

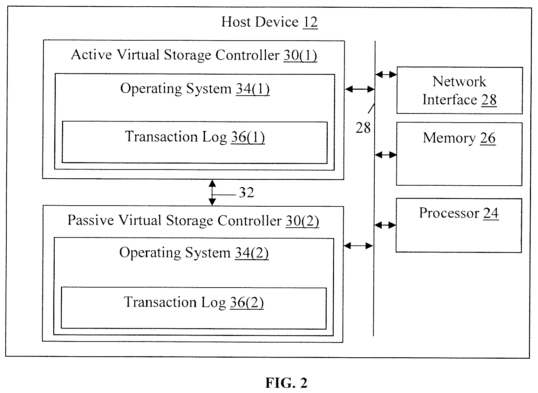

Referring more specifically to FIG. 2, a block diagram of one of the exemplary host devices is illustrated. In this example, the host device 12 includes a processor 24, a memory 26, and at least one network interface 28, coupled together by a bus 28 or other communication link. The host device 12 further includes an active virtual storage controller 30(1) and a passive virtual storage controller 30(2) coupled together by an interconnect 32 or other communication link, although the active and passive virtual storage controllers 30(1) and 30(2) can be coupled together in other manners and additional virtual storage controllers may be executing on the host device 12 at any time.

The processor 24 of the host device 12 may execute programmed instructions stored in a memory 26 for various functions and/or operations illustrated and described herein. The memory 26 of the host device 12 may include any of various forms of read only memory (ROM), random access memory (RAM), Flash memory, non-volatile, or volatile memory, or the like, or a combination of such devices for example. The memory 26 can store instructions comprising a host operating system that, when executed by the processor 24, generates a hypervisor that interfaces hardware of the host device 12 with the active and passive virtual storage controllers 30(1) and 30(2), such as through virtual machine(s), for example, although the active and passive virtual storage controllers 30(1) and 30(2) can be executed and implemented in other manners.

The active virtual storage controller 30(1) currently services traffic associated with the storage and retrieval of data stored by one or more of the storage servers 15(1)-15(n). The passive virtual storage controller 30(2) monitors the active virtual storage controller 30(2) to determine when the active virtual storage controller 30(1) fails, at which time the passive virtual storage controller 30(2) assumes the role of the active virtual storage controller 30(1), as described and illustrated in more detail later. Each of the active and passive virtual storage controllers 30(1) and 30(2) in this example has an associated operating system 34(1) and 34(2) and transaction log 36(1) and 36(2), respectively. The transaction logs 36(1) and 36(2) are used by the active and passive virtual storage controllers 30(1) and 30(2), respectively, to store information associated with transactions received from the client devices 14(1)-14(n), for example, although the transaction logs 36(1) and 36(2) can also be used to store other information received from other sources. In other examples, the passive virtual storage controller 30(2) does not maintain a transaction log and instead retrieves a transaction log associated with a failed active virtual storage controller 30(1) from the optional transaction log database 18, as described and illustrated in more detail later.

The active and passive designations for the virtual storage controllers 30(1) and 30(2) are for exemplary purposes and indicate the current role of the virtual storage controllers 30(1) and 30(2), although either of the virtual storage controllers 30(1) and 30(2) could be operating in an active or passive role at any time, as described and illustrated in more detail later. Additionally, the host device 12 includes both an active virtual storage controller 30(1) and a passive virtual storage controller 30(2) for exemplary purposes only and, in other examples, either of the active virtual storage controller 30(1) or the passive virtual storage controller 30(2) could be executing on a different one of the host devices 12(1)-12(n), as described and illustrated in more detail later. Moreover, any one or more of the host devices 12(1)-12(n) could include any number of active virtual storage controllers associated with any number of passive virtual storage controllers. For example, a plurality of active virtual storage controllers could be associated with one virtual storage controller in an n-way high availability implementation, also as described and illustrated in more detail later.

The network interface 28 of the host device 12 in this example can include a plurality of network interface controllers (NICs), for example, each associated with a respective one of the active and passive virtual storage controllers 30(1) and 30(2), for operatively coupling and communicating between the host device 12, the client devices 14(1)-14(n), and the storage servers 15(1)-15(n), which are coupled together by the communication network(s) 20(1) and 20(2), although other types and numbers of communication networks or systems with other types and numbers of connections and configurations to other devices and elements also can be used.

By way of example only, the communication network(s) 20(1) and/or 20(2) can use TCP/IP over Ethernet and industry-standard protocols, including NFS, CIFS, SOAP, XML, LDAP, and SNMP, although other types and numbers of communication networks, can be used. The communication network(s) 20(1) and 20(2) in this example may employ any suitable interface mechanisms and network communication technologies including, for example, teletraffic in any suitable form (e.g., voice, modem, and the like), Public Switched Telephone Network (PSTNs), Ethernet-based Packet Data Networks (PDNs), combinations thereof, and the like. The communication network(s) 20(1) and 20(2) may also comprise any local area network and/or wide area network (e.g., Internet), although any other type of traffic network topologies may be used.

Although examples of the host device 12, client devices 14(1)-14(n), storage servers 15(1)-15(n), and transaction log database 18 are described herein, it is to be understood that the devices and systems of the examples described herein are for exemplary purposes, as many variations of the specific hardware and software used to implement the examples are possible, as will be appreciated by those skilled in the relevant art(s). In addition, two or more computing systems or devices can be substituted for any one of the systems in any embodiment of the examples.

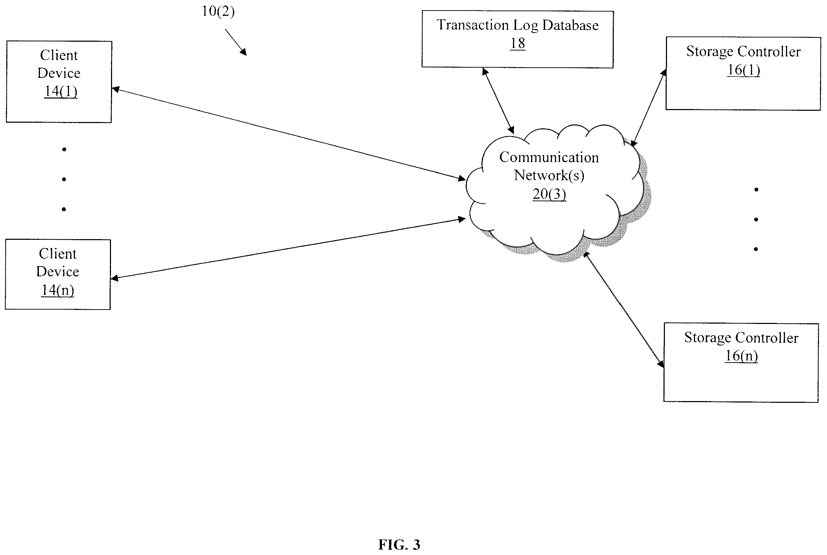

Referring to FIG. 3, another network environment 10(2) including a storage fabric with the client devices 14(1)-14(n), storage controllers 16(1)-16(n), and the transaction log database 18 coupled together by communication network(s) 20(3) is illustrated in FIG. 1, although this environment 10(2) can include other numbers and types of systems, devices, components, and/or elements in other configurations, such as multiple numbers of each of these apparatuses and devices. By way of example only, the storage controllers 16(1)-16(n) can be virtual storage controllers running as virtual machines or physical storage controllers included in purpose built storage arrays.

The communication network(s) 20(3) in this example may employ any suitable interface mechanisms and network communication technologies including, for example, teletraffic in any suitable form (e.g., voice, modem, and the like), Public Switched Telephone Network (PSTNs), Ethernet-based Packet Data Networks (PDNs), combinations thereof, and the like. The communication network(s) 20(3) may also comprise any local area network and/or wide area network (e.g., Internet), although any other type of traffic network topologies may be used.

Referring more specifically to FIG. 2, a block diagram of an exemplary one of the storage controllers 16(1)-16(n) is illustrated. The storage controller 16 in this example includes a processor 38, a memory 40, at least one network interface 42, storage devices 44(1)-44(n), and an operating system 46 coupled together by a bus 48 or other communication link.

The storage controller 16 can be operating in an active or passive state, as described and illustrated in more detail later. In an active state, the storage controller 16 services traffic associated with the storage and retrieval of data stored by one or more of the storage devices 44(1)-44(n), for example. In a passive state, the storage controller 16 monitors one or more active storage controllers to determine when one of the active storage controllers fails, at which time the storage controller 16 operating in a passive state assumes the role of the failed one of the active storage controllers, as described and illustrated in more detail later.

The processor 38 of the storage controller 16 may execute programmed instructions stored in the memory 26 for various functions and/or operations illustrated and described herein. The memory 40 of the storage controller 16 may include any of various forms of read only memory (ROM), random access memory (RAM), Flash memory, non-volatile, or volatile memory, or the like, or a combination of such devices, for example.

The network interface 42 operatively couples and communicates between the storage controller 16, the client devices 14(1)-14(n), and the transaction log database 18, which are all coupled together by the communication network(s) 20(3), although other types and numbers of connections and configurations to other devices and elements can also be used. By way of example only, the communication network(s) 20(3) can use TCP/IP over Ethernet and industry-standard protocols, including NFS, CIFS, SOAP, XML, LDAP, and SNMP, although other types and numbers of communication networks, can also be used.

The storage devices 44(1)-44(n) in this example can include conventional magnetic disks, solid-state drives (SSDs), or any other type of stable, non-volatile storage device suitable for storing large quantities of data. The storage devices 44(1)-44(n) may be organized into one or more volumes of Redundant Array of Inexpensive Disks (RAID).

Although examples of the client devices 14(1)-14(n), storage controllers 16(1)-16(n), and transaction log database 18 are described herein, it is to be understood that the devices and systems of the examples described herein are for exemplary purposes, as many variations of the specific hardware and software used to implement the examples are possible, as will be appreciated by those skilled in the relevant art(s). In addition, two or more computing systems or devices can be substituted for any one of the systems in any embodiment of the examples.

The examples also may be embodied as a non-transitory computer readable medium having instructions stored thereon for one or more aspects of the present technology as described and illustrated by way of the examples herein, as described herein, which when executed by the processor, cause the processor to carry out the steps necessary to implement the methods of this technology as described and illustrated with the examples herein.

### High Availability Storage Services in Virtualized Cloud Environments

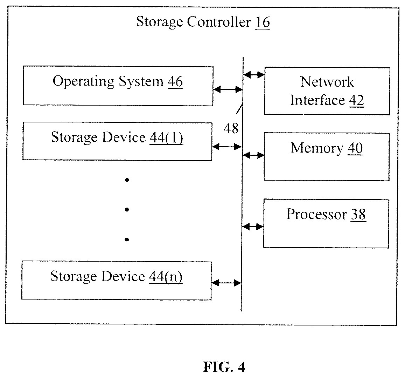

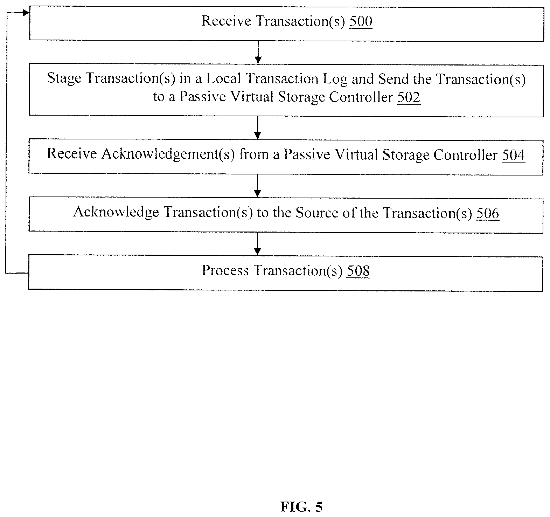

An exemplary method for facilitating high availability storage services will now be described with reference to FIGS. 1-2 and 4-5. Referring more specifically to FIG. 5, an exemplary method for facilitating high availability storage services with the active virtual storage controller 30(1) is illustrated. In step 500 in this example, the active virtual storage controller 30(1) executing on the host device 12 receives one or more transactions, such as from one or more of the client devices 14(1)-14(n), for example, although the one or more transactions can be received from other sources. Exemplary transactions can include requests from one of the client devices 14(1)-14(n) to read or write data, although other numbers and types of transactions can be received in step 500.

In step 502, the active virtual storage controller 30(1) stages the one or more transactions, such as by storing the one or more transactions in the transaction log 36(2), for example. The one or more transactions are staged because they may be received more quickly than they can be processed by the active virtual storage controller 30(1). Generally, processing the transactions using the storage servers 15(1)-15(n) requires a relatively long period of time considering the mechanical nature of the operation of storing and retrieving data on disks of the storage servers 15(1)-15(n).

In this example, the active virtual storage controller 30(2) also sends the one or more transactions to the passive virtual storage controller 30(2), which stores the one or more transactions, as described and illustrated in more detail later. In another example, such as an n-way high availability implementation in which a plurality of active virtual storage controllers are monitored by one passive virtual storage controller, the active virtual storage controller can send the one or more transactions to the transaction log database 18 with a unique identifier of the active virtual storage controller 30(1). Upon receipt, the transaction log database 18 stores the one or more transactions as associated with the active virtual storage controller 30(1). Optionally, only a subset of the one or more transactions received in step 500 are sent to the passive virtual storage controller 30(2), such as those write transactions that affect data stored by the storage servers 15(1)-15(n), for example.

In step 504 in this example in which the one or more transactions are sent by the active virtual storage controller 30(1) to the passive virtual storage controller 30(2), the active virtual storage controller 30(1) receives one or more acknowledgements from the passive virtual storage controller 30(2) of receipt of each of the one or more transactions. After receiving the one or more acknowledgements in step 504, the active virtual storage controller 30(1) acknowledges the one or more transactions in step 506 to the source of the one or more transactions, such as one or more of the client devices 14(1)-14(n), for example.

In step 508, the active virtual storage controller 30(1) executing on the host device 12 processes the one or more transactions received in step 500, such as by retrieving requested data from one or more of the storage servers 15(1)-15(n) and/or writing data to one or more of the storage servers 15(1)-15(n), for example.

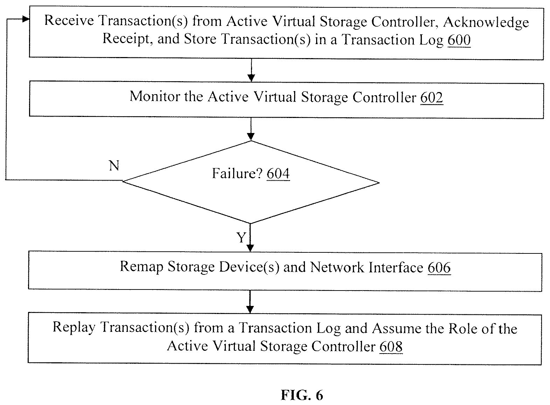

Referring more specifically to FIG. 6, an exemplary method for facilitating high availability storage services with a passive virtual storage controller is illustrated. In step 600 in this example, the passive virtual storage controller 30(2) executing on the host device 12, receives one or more transactions from the active virtual storage controller 30(1), such as sent by the active virtual storage controller 30(1) as described and illustrated earlier with reference to step 502 of FIG. 5, for example.

Referring back to step 600 in FIG. 6, the passive virtual storage controller 30(2) also acknowledges receipt of the one or more transactions and stores the one or more transactions in the transaction log 36(2). Accordingly, the passive virtual storage controller 30(2) in this example effectively maintains a copy of the transaction log 36(1) that is used by the active virtual storage controller 30(1) to stage and process transactions, as described and illustrated earlier.

In step 602, the passive virtual storage controller 30(2) monitors the active virtual storage controller 30(2). The monitoring can be based on a heartbeat signal periodically sent from the active virtual storage controller 30(1) to the passive virtual storage controller 30(2) using the interconnect 32 or other means. The active virtual storage controller 30(1) can be configured to periodically initiate the heartbeat signal or the passive virtual storage controller 30(2) can periodically send a message using the interconnect 32 to prompt the active virtual storage controller 30(1) to send the heartbeat signal.

In n-way high availability implementation, for example, the heartbeat message received from the active virtual storage controller 30(1) includes a unique identifier of the active virtual storage controller 30(2), which is used as described and illustrated in more detail later. Other methods of monitoring the health of the active virtual storage controller 30(1) can also be used.

In step 604, the passive virtual storage controller 30(2) determines whether the active virtual storage controller 30(1) has entered a failure state. In this example, the passive virtual storage controller 30(2) can determine whether the active virtual storage controller 30(1) has failed based on whether it has received a heartbeat signal within a specified period of time since a prior heartbeat signal. In another example, the active virtual storage controller 30(1) is configured to communicate to the passive virtual storage controller 30(2) using the interconnect 32 that it has entered a failure state. Other methods of determining that the active virtual storage controller 30(1) has failed can also be used.

In this example, the passive virtual storage controller 30(2) is executed by the same host device 12 and using the same hypervisor as the active virtual storage controller 30(1). Accordingly, the failure identified by the passive virtual storage controller 30(2) is of the operating system 34(1). However, in examples in which the passive virtual storage controller 30(2) and the active virtual storage controller 30(1) are executed by different ones of the host devices 12(1)-12(n), the failure could be a hypervisor or hardware failure, for example.

If the passive virtual storage controller 30(2) determines that the active virtual storage controller 30(1) has not failed, then the No branch is taken back to step 600 and the passive virtual storage controller 30(2) continues to receive one or more transactions from the active virtual storage controller 30(1), as described and illustrated earlier. Any of steps 400-404 can be performed by the passive virtual storage controller 30(2) in parallel.

Referring back to step 604, if the passive virtual storage controller 30(2) determines that the active virtual storage controller 30(1) has failed, then the Yes branch is taken to step 606. In step 606, the passive virtual storage controller 30(2) remaps at least one or more of the storage devices 22(1)-22(n) previously assigned to the active virtual storage controller 30(1) to be assigned to the passive virtual storage controller 30(2). The remapped one or more of the storage devices 22(1)-22(n) can also be virtual storage devices corresponding to one or more of the storage devices 22(1)-22(n) or portions thereof, for example. In one example, in order to remap the one or more of the storage devices 22(1)-22(n), the passive virtual storage controller 32(2) can make call(s) to an application programming interface (API) supported by the cloud platform provider, for example, although other methods of remapping the one or more of the storage devices 22(1)-22(n) can also be used.

In some examples, the passive virtual storage controller 30(2) also remaps the network interface 28, or more specifically a network interface controller (NIC) of the network interface 28, previously assigned to the active virtual storage controller 30(1) to be associated with the passive virtual storage controller 30(1). By remapping the NIC, an application associated with one or more of the client devices 14(1)-14(n) previously communicating with the operating system 34(1) of the active virtual storage controller 30(1) can communicate with the operating system 34(2) of the passive virtual storage controller 30(2). The NIC can be remapped using call(s) to the API supposed by the cloud platform provider or through IP address translation of the traffic received from one or more of the client devices 14(1)-14(n), as managed by one or more of the operating systems 34(1) and/or 34(2), for example, although other methods of remapping the NIC can also be used.

In step 608, the passive virtual storage controller 30(2) replays the transactions stored in the transaction log 36(2) and effectively assumes the role of the active virtual storage controller 30(1). Upon rebooting in response to the failure, the active virtual storage controller 30(1) will effectively assume the role of the passive virtual storage controller 30(2). In this example, the transaction log 36(2) is a local transaction log managed by the passive virtual storage controller 30(2).

In other examples, such as in an n-way high availability implementation, the copy of the transaction log 36(1) can be maintained by the active virtual storage controller 30(1) in the transaction log database 18. Accordingly, in these examples, the passive virtual storage controller 30(2) can use a unique identifier of the active virtual storage controller 30(1), such as communicated with the heartbeat signal, for example, to retrieve the transaction log corresponding to the active virtual storage controller 30(1) that failed.

With this technology, a passive virtual storage controller maintains or accesses a copy of the transaction log utilized by a failed active virtual storage controller so that it can assume the role of the failed virtual storage controller by remapping the storage devices previously assigned to the failed virtual storage controller. Accordingly, high availability of virtual storage controllers can be provided on a cloud platform without requiring replication of data and associated cost and with reduced disruption to applications utilizing the virtual storage controllers.

### N-way High Availability Storage Services

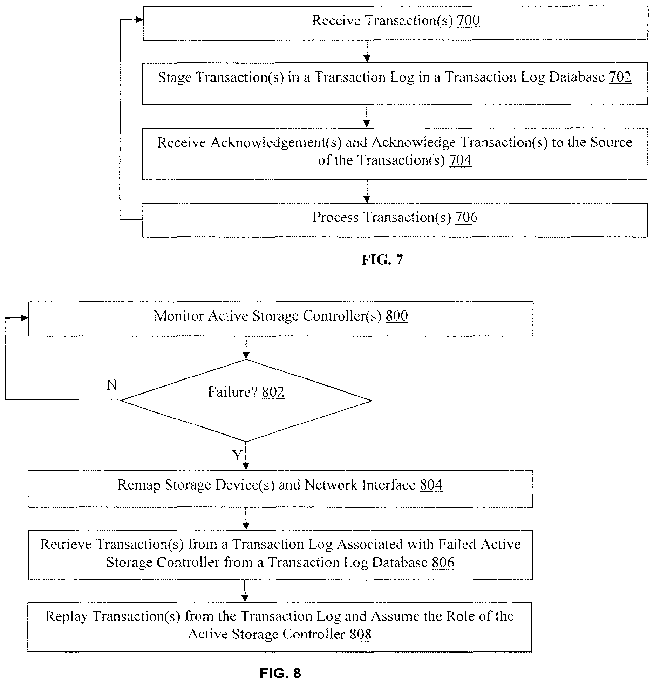

An exemplary method for facilitating n-way high availability storage services will now be described with reference to FIGS. 3-4 and 7-11. Referring more specifically to FIG. 7, an exemplary method for facilitating high availability storage services with an active one of the storage controllers 16(1)-16(n) is illustrated. In step 700 in this example, the active one of the storage controllers 16(1)-16(n) receives one or more transactions, such as from one or more of the client devices 14(1)-14(n), for example, although the transactions can be received from other sources including internal processes executing on the active one of the storage controllers 16(1)-16(n). Exemplary transactions can include requests from one of the client devices 14(1)-14(n) to read or write data, although other numbers and types of transactions can be received in step 700.

In step 702, the active one of the storage controllers 16(1)-16(n) stages the transactions, such as by storing the one or more transactions in the transaction log database 18 in a transaction log associated with the active one of the storage controllers 16(1)-16(n), for example. The transactions are staged because they may be received more quickly than they can be processed by the one of the active one of the storage controllers 16(1)-16(n). Generally, processing the transactions requires a relatively long period of time considering the mechanical nature of the operation of storing and retrieving data on disks of the storage devices 44(1)-44(n).

In this example, the active one of the storage controllers 16(1)-16(n) can send the one or more transactions to the transaction log database 18 with a unique identifier of the active one of the storage controllers 16(1)-16(n). Upon receipt, the transaction log database 18 stores the one or more transactions in a transaction log associated with the active one of the storage controllers 16(1)-16(n), as identified based on the unique identifier. Optionally, only a subset of the one or more transactions received in step 700 are sent to the transaction log database 18, such as those write transactions that affect data stored by the storage devices 44(1)-44(n), for example.

In step 704, the active one of the storage controllers 16(1)-16(n) executing on the host device 12 receives an acknowledgement that each transaction was successfully stored by the transaction log database 18. After receiving each acknowledgement, the active one of the storage controllers 16(1)-16(n) acknowledges the transaction to the source of the transactions, such as one or more of the client devices 14(1)-14(n), for example.

In step 706, the active one of the storage controllers 16(1)-16(n) processes the transactions received in step 700 from the corresponding transaction log in the transaction log database 18, such as by retrieving requested data from one or more of the storage devices 44(1)-44(n) and/or writing data to one or more of the storage devices 44(1)-44(n), for example.

Referring more specifically to FIG. 8, an exemplary method for facilitating n-way high availability storage services with a passive one of the storage controllers 16(1)-16(n) is illustrated. In step 800 in this example, the passive one of the storage controllers 16(1)-16(n) monitors one or more active ones of the storage controllers 16(1)-16(n). Accordingly, the passive one of the storage controllers 16(1)-16(n) may monitor any numbers of active ones of the storage controllers 16(1)-16(n) and/or other numbers of passive ones of the storage controllers 16(1)-16(n) could be used to monitor the active ones of the storage controllers 16(1)-16(n).

The monitoring can be based on a heartbeat signal periodically sent from the monitored one or more of the active ones of the storage controllers 16(1)-16(n) to the passive one of the storage controllers 16(1)-16(n) using an interconnect or other communication link, for example. The monitored one or more active ones of the storage controllers 16(1)-16(n) can be configured to periodically initiate the heartbeat signal or the passive one of the storage controllers 16(1)-16(n) can periodically send a message using the interconnect or other communication link to prompt the monitored active ones of the storage controllers 16(1)-16(n) to send the heartbeat signal.

In some examples, the heartbeat message received from each of the monitored active ones of the storage controllers 16(1)-16(n) includes a unique identifier of the respective one of the active ones of the storage controllers 16(1)-16(n), which is used as described and illustrated in more detail later. Other methods of monitoring the health of one or more of the active ones of the storage controllers 16(1)-16(n) also can be used.

In step 802, the passive one of the storage controllers 16(1)-16(n) determines whether a monitored active one of the storage controllers 16(1)-16(n) has entered a failure state. In this example, the passive one of the storage controllers 16(1)-16(n) can determine whether the active one of the storage controllers 16(1)-16(n) has failed based on whether it has received a heartbeat signal within a specified period of time since a prior heartbeat signal.

In another example, the active one of the storage controllers 16(1)-16(n) can be configured to communicate to the passive one of the storage controllers 16(1)-16(n), using an interconnect or other communication link, that it has entered a failure state. Other methods of determining that the active one of the storage controllers 16(1)-16(n) has failed also can be used. In this example, the failure identified by the passive one of the storage controllers 16(1)-16(n) can be of the one of the operating systems 34 of the monitored one of the active storage controllers 16(1)-16(n), a hypervisor failure, or a hardware failure, for example.

If the passive one of the storage controllers 16(1)-16(n) determines in step 802 that none of the monitored active ones of the storage controllers 16(1)-16(n) has failed, then the No branch is taken back to step 800 and the passive one of the storage controllers 16(1)-16(n) continues to monitor active ones of the storage controllers 16(1)-16(n) and effectively wait for one of the active ones of the storage controllers 16(1)-16(n) to fail.

Referring back to step 802, if the passive one of the storage controllers 16(1)-16(n) determines that one of the active ones of the storage controllers 16(1)-16(n) has failed, then the Yes branch is taken to step 804. In step 804, the passive one of the storage controllers 16(1)-16(n) remaps at least one or more of the storage devices 44(1)-44(n) previously assigned to the failed active one of the storage controllers 16(1)-16(n) to be assigned to the passive one of the storage controllers 16(1)-16(n). The remapped one or more of the storage devices 44(1)-44(n) also can be virtual storage devices corresponding to one or more of the storage devices 44(1)-44(n) or portions thereof, for example. In one example, in order to remap the one or more of the storage devices 44(1)-44(n), the passive one of the storage controllers 16(1)-16(n) can make call(s) to an application programming interface (API) supported by the cloud platform provider, for example, although other methods of remapping the one or more of the storage devices 44(1)-44(n) can also be used.

In some examples, the passive one of the storage controllers 16(1)-16(n) also remaps the network interface 28, or more specifically a network interface controller (NIC) of the network interface 28, previously assigned to the failed active one of the storage controllers 16(1)-16(n) to be associated with the passive one of the storage controllers 16(1)-16(n). By remapping the NIC, an application associated with one or more of the client devices 14(1)-14(n) previously communicating with the one of the operating systems 34 associated with the failed active one of the storage controllers 16(1)-16(n) can communicate with the operating system 34 of the passive one of the storage controllers 16(1)-16(n). The NIC can be remapped using call(s) to the API provided by the cloud platform provider or through IP address translation of the traffic received from one or more of the client devices 14(1)-14(n), as managed by the operating system 34, for example, although other methods of remapping the NIC can also be used.

In step 806, the passive one of the storage controllers 16(1)-16(n) retrieves the transaction log associated with the failed one of the active storage controllers 30(1)-30(n) from the transaction log database 18. The passive one of the storage controllers 16(1)-16(n) can use a unique identifier of the failed active one of the storage controllers 16(1)-16(n), such as communicated with the heartbeat signal, for example, to retrieve the transaction log corresponding to the failed active one of the storage controllers 16(1)-16(n), although other methods of identifying and/or retrieving the transaction log associated with the failed active one of the storage controllers 16(1)-16(n) can also be used.

In step 808, the passive one of the storage controllers 16(1)-16(n) replays the transactions stored in the transaction log retrieved in step 806 and effectively assumes the role of the failed active one of the storage controllers 16(1)-16(n). In parallel, the failed active one of the storage controllers 16(1)-16(n), performs a failure processing routine including performing a core dump and rebooting the associated operating system 34, for example. Upon rebooting, the failed active one of the storage controllers 16(1)-16(n) can effectively assume the role of the passive one of the storage controllers 16(1)-16(n).

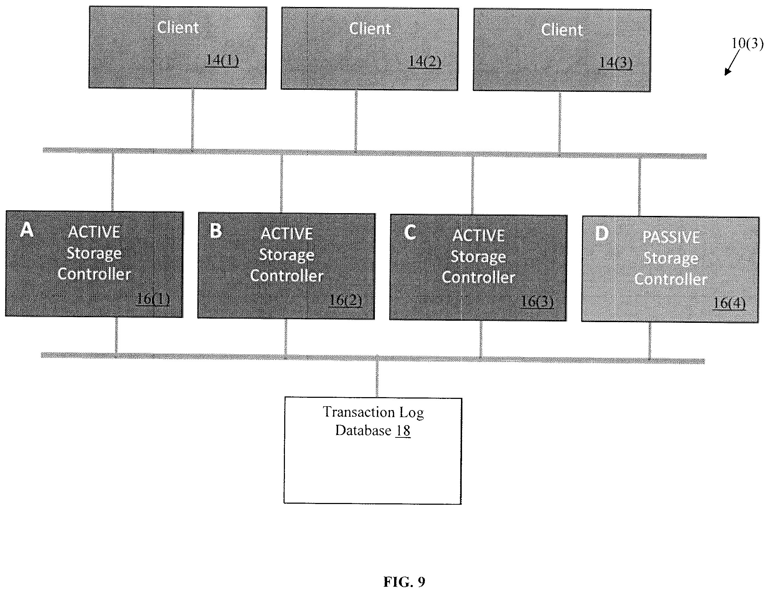

Referring more specifically to FIG. 9, in another example, another exemplary network environment 10(3) with three active storage controllers 16(1), 16(2), and 16(3) and a passive storage controller 16(4) is illustrated. Additionally, the network environment 10(3) in this example includes three client devices 14(1), 14(2), 14(3), and a transaction log database.

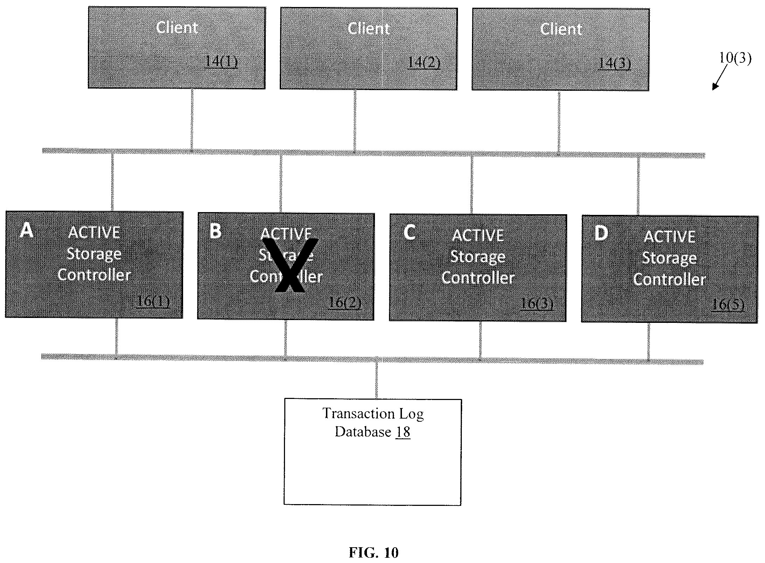

Referring more specifically to FIG. 10, the exemplary network environment 10(3) is illustrated in which one of the active storage controllers 16(2) (also referred to in FIG. 10 as "storage controller B") has failed and the formerly passive storage controller 16(4) (also referred to in FIG. 10 as "storage controller D") has become an active storage controller 16(5). Accordingly, in this example active storage controller B 16(2) fails, passive storage controller D 16(4) retrieves storage controller B's 16(2) transaction log from the transaction log database, and replays the transactions, as described and illustrated earlier with reference to FIG. 8. Thereafter, storage controller D transitions its role to an active storage controller 16(5). The transaction log associated with the active storage controller B 16(2) that is retrieved and replayed was previously maintained by the active storage controller B 16(2) as described and illustrated earlier with reference to FIG. 7.

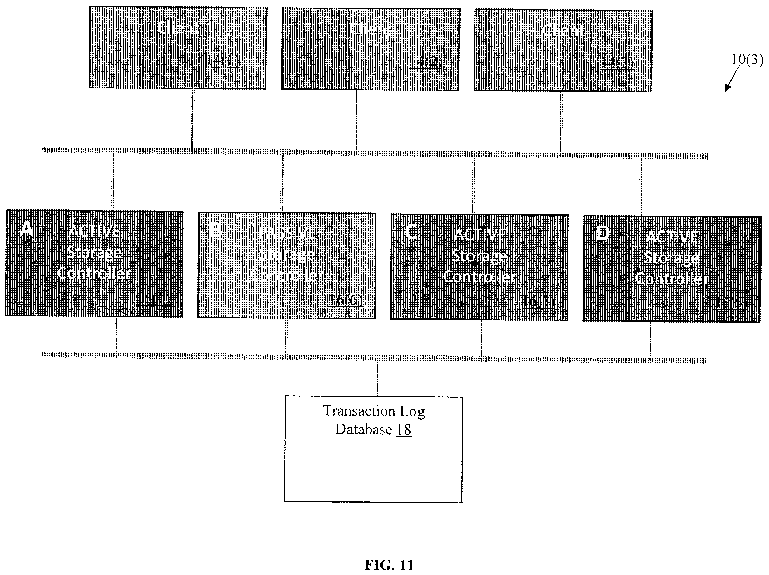

Referring more specifically to FIG. 11 an exemplary network environment 10(3) is illustrated in which the one of the active storage controllers 16(2) that failed has become a passive storage controller 16(6). Accordingly, in this example, once storage controller B is healed, it returns to the storage fabric as passive controller 16(6).

Accordingly, with this technology, a passive storage controller can retrieve and replay transactions in a transaction log corresponding to a failed active storage controller and retrieved from a transaction log database. By maintaining transaction logs on a shared memory service, a passive storage controller can monitor any number of active storage controllers. Additionally, this technology is optimized for scalability and network administrators can control the ratio of passive and active storage controllers in order to provide a desired level of protection and availability. Further, high availability of storage controllers can advantageously be provided on a cloud platform without requiring replication of data and associated cost, with reduced disruption to applications utilizing the storage controllers, and with increased scalability.

Having thus described the basic concept of the invention, it will be rather apparent to those skilled in the art that the foregoing detailed disclosure is intended to be presented by way of example, and is not limiting. Various alterations, improvements, and modifications will occur and are intended to those skilled in the art, though not expressly stated herein. Additionally, the recited order of processing elements or sequences, or the use of numbers, letters, or other designations therefore, is not intended to limit the claimed processes to any order except as may be specified in the claims.

## Claims

1. A method for facilitating n-way high availability storage services, the method comprising:
monitoring (800) with a passive storage controller (16(4)) a plurality of active storage controllers (16(1), 16(2), 16(3)), wherein each storage controller has an associated transaction log (36) to store information associated with transactions received from client devices (14);
determining (802) with the passive storage controller when a failure of one of the active storage controllers has occurred based on the monitoring; and
remapping (804) one or more storage devices (22(1) ... 22(n)) previously assigned to the one of the active storage controllers to the passive storage controller;
retrieving (806) one of the plurality of transaction logs corresponding to the one of the active storage controllers from a transaction log database (18), wherein the transaction log database is separate from the active storage controllers and the passive storage controller, and is accessible over at least one communication network (20(3)) by the active storage controllers and the passive storage controller; and
replaying (808) one or more transactions in the one transaction log with the passive storage controller when the failure of the one of the active storage controllers is determined to have occurred.

2. The method of claim 1, wherein the transaction log database stores the transaction logs and each of the transaction logs is maintained by, and stores transactions for, a different one of the active storage controllers.

3. The method of claim 1, wherein the monitoring further comprises receiving a heartbeat periodically from each of the active storage controllers and a failure of the one of the active storage controllers is determined to have occurred when a heartbeat is not received from the one of the active storage controllers for a specified period of time.

4. The method of claim 3, wherein the heartbeat comprises an identifier of the one of the active storage controllers and the method further comprises retrieving with the passive storage controller the transaction log from the transaction log database based on the identifier.

5. The method of claim 1, wherein the remapping further comprises remapping a network interface previously assigned to the one of the active storage controllers to be assigned to the passive storage controller.

6. The method of any preceding claim, wherein the passive storage controller and the plurality of active storage controllers are virtual storage controllers.

7. An apparatus, comprising a processor and a memory coupled to the processor which is configured to be capable of executing programmed instructions comprising and stored in the memory to:
monitor with a passive storage controller (16(4)) a plurality of active storage controllers (16(1), 16(2), 16(3)), wherein each storage controller has an associated transaction log (36) to store information associated with transactions received from client devices (14);
determine with the passive storage controller when a failure of one of the active storage controllers has occurred based on the monitoring; and
remap one or more storage devices (22(1) ... 22(n)) previously assigned to the one of the active storage controllers to the passive storage controller;
retrieve one of the plurality of transaction logs corresponding to the one of the active storage controllers from a transaction log database (18), wherein the transaction log database is separate from the active storage controllers and the passive storage controller, and is accessible over at least one communication network by the active storage controllers and the passive storage controller; and
replay one or more transactions in the one transaction log with the passive storage controller when the failure of the one of the active storage controllers is determined to have occurred.

8. The apparatus of claim 7, wherein the transaction log database stores the transaction logs and each of the transaction logs is maintained by, and stores transactions for, a different one of the active storage controllers.

9. The apparatus of claim 7, wherein the processor coupled to the memory is further configured to be capable of executing at least one additional programmed instruction comprising and stored in the memory to receive with the passive storage controller a heartbeat periodically from each of the active storage controllers and a failure of the one of the active storage controllers is determined to have occurred when a heartbeat is not received from the one of the active storage controllers for a specified period of time.

10. The apparatus of claim 9, wherein the heartbeat comprises an identifier of the one of the active storage controllers and the processor coupled to the memory is further configured to be capable of executing at least one additional programmed instruction comprising and stored in the memory to retrieve with the passive storage controller the transaction log from the transaction log database based on the identifier.

11. The apparatus of claim 7, wherein the processor coupled to the memory is further configured to be capable of executing at least one additional programmed instruction comprising and stored in the memory to remap a network interface previously assigned to the one of the active storage controllers to be assigned to the passive storage controller.

12. The apparatus of any of claims 7 to 11, wherein the passive storage controller and the plurality of active storage controllers are virtual storage controllers.

13. A non-transitory computer readable medium having stored thereon instructions for facilitating high availability storage services comprising machine executable code which when executed by a processor, causes the processor to perform the method of any of claims 1 to 6.

## Patentansprüche

1. Verfahren zum Ermöglichen von n-Wege-Speicherdiensten mit hoher Verfügbarkeit, wobei das Verfahren umfasst:
Überwachen (800) einer Mehrzahl von aktiven Speichersteuerungen (16(1), 16(2), 16(3)) mit einer passiven Speichersteuerung (16(4)), wobei jede Speichersteuerung ein assoziiertes Transaktionsprotokoll (36) zum Speichern von Informationen aufweist, die mit Transaktionen assoziiert sind, die von Client-Geräten (14) empfangen werden;
Bestimmen (802) basierend auf dem Überwachen, wann ein Fehler einer der aktiven Speichersteuerungen aufgetreten ist, mit der passiven Speichersteuerung; und
Neuzuordnen (804) eines oder mehrerer Speichergeräte (22(1) ... 22(n)), die vorher der einen der aktiven Speichersteuerungen zugeordnet waren, zu der passiven Speichersteuerung;
Abrufen (806) eines der Mehrzahl von Transaktionsprotokollen, die der einen der aktiven Speichersteuerungen entsprechen, aus einer Transaktionsprotokoll-Datenbank (18), wobei die Transaktionsprotokoll-Datenbank von den aktiven Speichersteuerungen und der passiven Speichersteuerung getrennt und für die aktiven Speichersteuerungen und die passive Speichersteuerung über mindestens ein Kommunikationsnetzwerk (20(3)) zugänglich ist; und
Wiederholen (808) einer oder mehrerer Transaktionen im Transaktionsprotokoll mit der passiven Speichersteuerung, wenn bestimmt wird, dass der Fehler der einen der aktiven Speichersteuerungen aufgetreten ist.

2. Verfahren nach Anspruch 1, wobei die Transaktionsprotokoll-Datenbank die Transaktionsprotokolle speichert, und jedes der Transaktionsprotokolle von einer verschiedenen der aktiven Speichersteuerungen gepflegt wird und Transaktionen dafür speichert.

3. Verfahren nach Anspruch 1, wobei das Überwachen ferner ein periodisches Empfangen einer Testmeldung von jeder der aktiven Speichersteuerungen umfasst, und bestimmt wird, dass ein Fehler der einen der aktiven Speichersteuerungen aufgetreten ist, wenn für einen spezifizierten Zeitraum keine Testmeldung von der einen der aktiven Speichersteuerungen empfangen wird.

4. Verfahren nach Anspruch 3, wobei die Testmeldung eine Kennung der einen der aktiven Speichersteuerungen umfasst, und das Verfahren ferner ein Abrufen des Transaktionsprotokolls aus der Transaktionsprotokoll-Datenbank mit der passiven Speichersteuerung basierend auf der Kennung umfasst.

5. Verfahren nach Anspruch 1, wobei das Neuzuordnen ferner ein Neuzuordnen einer Netzwerkschnittstelle, die vorher der einen der aktiven Speichersteuerungen zugeordnet war, umfasst, um der passiven Speichersteuerung zugeordnet zu werden.

6. Verfahren nach einem der vorhergehenden Ansprüche, wobei die passive Speichersteuerung und die Mehrzahl von aktiven Speichersteuerungen virtuelle Speichersteuerungen sind.

7. Vorrichtung, umfassend einen Prozessor und einen Speicher, der mit dem Prozessor gekoppelt ist, der so konfiguriert ist, dass er fähig ist, programmierte Anweisungen, umfassend und gespeichert im Speicher, auszuführen zum:
Überwachen einer Mehrzahl von aktiven Speichersteuerungen (16(1), 16(2), 16(3)) mit einer passiven Speichersteuerung (16(4)), wobei jede Speichersteuerung ein assoziiertes Transaktionsprotokoll (36) zum Speichern von Informationen aufweist, die mit Transaktionen assoziiert sind, die von Client-Geräten (14) empfangen werden;
Bestimmen basierend auf dem Überwachen, wann ein Fehler einer der aktiven Speichersteuerungen aufgetreten ist, mit der passiven Speichersteuerung; und
Neuzuordnen eines oder mehrerer Speichergeräte (22(1) ... 22(n)), die vorher der einen der aktiven Speichersteuerungen zugeordnet waren, zu der passiven Speichersteuerung;
Abrufen eines der Mehrzahl von Transaktionsprotokollen, die der einen der aktiven Speichersteuerungen entsprechen, aus einer Transaktionsprotokoll-Datenbank (18), wobei die Transaktionsprotokoll-Datenbank von den aktiven Speichersteuerungen und der passiven Speichersteuerung getrennt und für die aktiven Speichersteuerungen und die passive Speichersteuerung über mindestens ein Kommunikationsnetzwerk zugänglich ist; und
Wiederholen einer oder mehrerer Transaktionen im Transaktionsprotokoll mit der passiven Speichersteuerung, wenn bestimmt wird, dass der Fehler der einen der aktiven Speichersteuerungen aufgetreten ist.

8. Vorrichtung nach Anspruch 7, wobei die Transaktionsprotokoll-Datenbank die Transaktionsprotokolle speichert, und jedes der Transaktionsprotokolle von einer verschiedenen der aktiven Speichersteuerungen gepflegt wird und Transaktionen dafür speichert.

9. Vorrichtung nach Anspruch 7, wobei der Prozessor, der mit dem Speicher gekoppelt ist, ferner so konfiguriert ist, dass er fähig ist, mindestens eine zusätzliche programmierte Anweisung, umfassend und gespeichert im Speicher, auszuführen, um mit der passiven Speichersteuerung periodisch eine Testmeldung von jeder der aktiven Speichersteuerungen zu empfangen und zu bestimmen, dass ein Fehler der einen der aktiven Speichersteuerungen aufgetreten ist, wenn für einen spezifizierten Zeitraum keine Testmeldung von der einen der aktiven Speichersteuerungen empfangen wird.

10. Vorrichtung nach Anspruch 9, wobei die Testmeldung eine Kennung der einen der aktiven Speichersteuerungen umfasst, und der Prozessor, der mit dem Speicher gekoppelt ist, ferner so konfiguriert ist, dass er fähig ist, mindestens eine zusätzliche programmierte Anweisung, umfassend und gespeichert im Speicher, auszuführen, um das Transaktionsprotokoll aus der Transaktionsprotokoll-Datenbank mit der passiven Speichersteuerung basierend auf der Kennung abzurufen.

11. Vorrichtung nach Anspruch 7, wobei der Prozessor, der mit dem Speicher gekoppelt ist, ferner so konfiguriert ist, dass er fähig ist, mindestens eine zusätzliche programmierte Anweisung, umfassend und gespeichert im Speicher, auszuführen, um eine Netzwerkschnittstelle, die vorher der einen der aktiven Speichersteuerungen zugeordnet war, neu zuzuordnen, um der passiven Speichersteuerung zugeordnet zu werden.

12. Vorrichtung nach einem der Ansprüche 7 bis 11, wobei die passive Speichersteuerung und die Mehrzahl von aktiven Speichersteuerungen virtuelle Speichersteuerungen sind.

13. Nicht-transitorisches computerlesbares Medium mit darauf gespeicherten Anweisungen zum Ermöglichen von Speicherdiensten mit hoher Verfügbarkeit, die maschinenausführbaren Code umfassen, der bei Ausführung durch einen Prozessor den Prozessor zum Durchführen des Verfahrens nach einem der Ansprüche 1 bis 6 veranlasst.

## Revendications

1. Procédé permettant de faciliter des services de stockage haute disponibilité à n-chemins, le procédé comprenant les étapes suivantes :
contrôler (800) avec un contrôleur de stockage passif (16(4)) une pluralité de contrôleurs de stockage actifs (16(1), 16(2), 16(3)), chaque contrôleur de stockage ayant un journal de transactions associé (36) destiné à stocker des informations associées à des transactions reçues à partir de dispositifs client (14) ;
déterminer (802) avec le contrôleur de stockage passif quand une défaillance d'un des contrôleurs de stockage actifs a eu lieu sur la base du contrôle; et
remapper (804) un ou plusieurs dispositifs de stockage (22(1) ... (22(n)) affectés précédemment au un des contrôleurs de stockage actifs au contrôleur de stockage passif ;
récupérer (806) un de la pluralité de journaux de transactions correspondant au un des contrôleurs de stockage actifs à partir d'une base de données de journaux de transactions (18), la base de données de journaux de transactions étant séparée des contrôleurs de stockage actifs et du contrôleur de stockage passif, et étant accessible sur au moins un réseau de communication (20(3)) par les contrôleurs de stockage actifs et par le contrôleur de stockage passif ; et
relire (808) une ou plusieurs transactions dans le un journal de transactions avec le contrôleur de stockage passif lorsque la défaillance du un des contrôleurs de stockage actifs est déterminée comme ayant eu lieu.

2. Procédé selon la revendication 1, dans lequel la base de données de journaux de transactions stocke les journaux de transactions et chacun des journaux de transactions est maintenu par un contrôleur différent des contrôleurs de stockage actifs et stocke des transactions pour un contrôleur différent des contrôleurs de stockage actifs.

3. Procédé selon la revendication 1, dans lequel l'étape de contrôle comprend en outre recevoir un battement de coeur périodiquement à partir de chacun des contrôleurs de stockage actifs et une défaillance du un des contrôleurs de stockage actifs est déterminée comme ayant eu lieu lorsqu'un battement de coeur n'est pas reçu à partir du un des contrôleurs de stockage actifs pendant une période spécifiée de temps.

4. Procédé selon la revendication 3, dans lequel le battement de coeur comprend un identifiant du un des contrôleurs de stockage actifs et le procédé comprend en outre récupérer avec le contrôleur de stockage passif le journal de transactions à partir de la base de données de journaux de transactions sur la base de l'identifiant.

5. Appareil selon la revendication 1, dans lequel l'étape de remappage comprend en outre remapper une interface réseau affectée précédemment au un des contrôleurs de stockage actifs pour qu'elle soit affectée au contrôleur de stockage passif.

6. Procédé selon l'une quelconque des revendications précédentes, dans lequel le contrôleur de stockage passif et la pluralité de contrôleurs de stockage actifs sont des contrôleurs de stockage virtuels.

7. Appareil, comprenant un processeur et une mémoire couplée au processeur qui est configuré pour être capable d'exécuter des instructions programmées stockées dans la mémoire et comprenant :
contrôler avec un contrôleur de stockage passif (16(4)) une pluralité de contrôleurs de stockage actifs (16(1), 16(2), 16(3)), chaque contrôleur de stockage ayant un journal de transactions associé (36) destiné à stocker des informations associées à des transactions reçues à partir de dispositifs client (14);
déterminer avec le contrôleur de stockage passif quand une défaillance d'un des contrôleurs de stockage actifs a eu lieu sur la base du contrôle; et
remapper un ou plusieurs dispositifs de stockage (22(1) ... (22(n)) affectés précédemment au un des contrôleurs de stockage actifs au contrôleur de stockage passif ;
récupérer un de la pluralité de journaux de transactions correspondant au un des contrôleurs de stockage actifs à partir d'une base de données de journaux de transactions (18), la base de données de journaux de transactions étant séparée des contrôleurs de stockage actifs et du contrôleur de stockage passif, et étant accessible sur au moins un réseau de communication par les contrôleurs de stockage actifs et par le contrôleur de stockage passif ; et
relire une ou plusieurs transactions dans le un journal de transactions avec le contrôleur de stockage passif lorsque la défaillance du un des contrôleurs de stockage actifs est déterminée comme ayant eu lieu.

8. Appareil selon la revendication 7, dans lequel la base de données de journaux de transactions stocke les journaux de transactions et chacun des journaux de transactions est maintenu par un contrôleur différent des contrôleurs de stockage actifs et stocke des transactions pour un contrôleur différent des contrôleurs de stockage actifs.

9. Appareil selon la revendication 7, dans lequel le processeur couplé à la mémoire est en outre configuré pour être capable d'exécuter au moins une instruction programmée additionnelle comprenant recevoir avec le contrôleur de stockage passif un battement de coeur périodiquement à partir de chacun des contrôleurs de stockage actifs et une défaillance du un des contrôleurs de stockage actifs est déterminée comme ayant eu lieu lorsqu'un battement de coeur n'est pas reçu à partir du un des contrôleurs de stockage actifs pendant une période spécifiée de temps.

10. Appareil selon la revendication 9, dans lequel le battement de coeur comprend un identifiant du un des contrôleurs de stockage actifs et le processeur couplé à la mémoire est en outre configuré pour être capable d'exécuter au moins une instruction programmée additionnelle stockée dans la mémoire et comprenant récupérer avec le contrôleur de stockage passif le journal de transactions à partir de la base de données de journaux de transactions sur la base de l'identifiant.

11. Appareil selon la revendication 7, dans lequel le processeur couplé à la mémoire est en outre configuré pour être capable d'exécuter au moins une instruction programmée additionnelle stockée dans la mémoire et comprenant remapper une interface réseau affectée précédemment au un des contrôleurs de stockage actifs pour qu'elle soit affectée au contrôleur de stockage passif.

12. Appareil selon l'une quelconque des revendications 7 à 11, dans lequel le contrôleur de stockage passif et la pluralité de contrôleurs de stockage actifs sont des contrôleurs de stockage virtuels.

13. Support non transitoire lisible par ordinateur stockant des instructions destinées à faciliter des services de stockage à haute disponibilité comprenant un code exécutable par machine qui, lorsqu'il est exécuté par un processeur, amène le processeur à mettre en oeuvre le procédé de l'une quelconque des revendications 1 à 6.
